# EUROPEAN PATENT SPECIFICATION

(11) **EP 4 417 496 B1**
(45) Date of publication and mention of the grant of the patent: **02.04.2025**
(21) Application number: 23207417.9
(22) Date of filing: 02.11.2023
(51) Int. Cl.: B62J 6/027

(54) **STRADDLED VEHICLE**
GRÄTSCHSITZFAHRZEUG
VÉHICULE À SELLE

(30) Priority: 17.02.2023 JP 2023023478
(43) Date of publication of application: 21.08.2024
(73) Proprietor: Yamaha Hatsudoki Kabushiki Kaisha, Iwata-shi, Shizuoka-ken 438-8501 (JP)
(72) Inventor: WATANABE, Ayuka, Iwata-shi, 438-8501 (JP)
(74) Representative: Studio Torta S.p.A.

(56) References cited:
- EP-A1- 3 333 055
- JP-A- 2005 199 793

## Description

### Technical field

The present invention relates to a straddled vehicle including a headlight.

### Prior art

As disclosed in JP2005-199793A, there has been known straddled vehicles in each of which lateral orientation of a headlight is adjustable.

A straddled vehicle disclosed in JP2005-199793A includes a headlight and left and right stays supporting the headlight. Bolt insertion holes of circular holes are formed in left and right side portions of the headlight. Bolt insertion holes of long holes elongated in the front-rear direction are formed in the left and right stays. The headlight is fixed to the stays with bolts inserted in the bolt insertion holes of the stays and the bolt insertion holes of the headlight.

Since the bolt insertion holes of the stays are long holes, the left side portion of the headlight can be moved forward and rearward relative to the left stay and the right side portion of the headlight can be moved forward and rearward relative to the right stay before the left and right bolts are fastened. Lateral orientation of the headlight can be adjusted by adjusting the positions of the left side portion and the right side portion of the headlight in the front-rear direction. After the adjustment of the lateral orientation of the headlight, the left and right bolts are fastened, thereby fixing the orientation of the headlight.

Patent Documnet 1: JP2005-199793A

In the straddled vehicle described above, however, after adjustment of orientation of the headlight, the left and right bolts have to be fastened carefully not to displace the orientation of the headlight. The work of adjusting the orientation of the headlight is relatively easy, but the work of fixing the orientation of the headlight is relatively troublesome. Additionally, document EP3333055 discloses a straddled vehicle comprising: a headlight including a body including a light source, a first attachment portion located at one of leftward or rightward of the body, and a second attachment portion located another of leftward or rightward of the body;a first stay supporting the first attachment portion of the headlight;a second stay supporting the second attachment portion of the headlight;a first bolt extending in a left-right direction and fixing the first attachment portion of the headlight to the first stay; and a second bolt extending in the left-right direction and fixing the second attachment portion of the headlight to the second stay, wherein the first attachment portion of the headlight, the second attachment portion of the headlight, the first stay, and the second stay include a first bolt hole, a second bolt hole, a third bolt hole, and a fourth bolt hole, respectively, the first bolt is inserted in the first bolt hole and the third bolt hole,the second bolt is inserted in the second bolt hole and the fourth bolt hole, at least one of the second bolt hole and the fourth bolt hole is a first elastic hole surrounded by an elastic body.

Preferred embodiments of the present invention provide straddled vehicles each of which eases the work of adjusting lateral orientation (orientation in left and right directions) of a headlight and the work of fixing orientation of the headlight.

### Description of the invention

A straddled vehicle disclosed here includes: a headlight including a body including a light source, a first attachment portion located at one of leftward or rightward of the body, and a second attachment portion located another of leftward or rightward of the body; a first stay supporting the first attachment portion of the headlight; a second stay supporting the second attachment portion of the headlight; a first bolt extending in a left-right direction and fixing the first attachment portion of the headlight to the first stay; and a second bolt extending in the left-right direction and fixing the second attachment portion of the headlight to the second stay. The first attachment portion of the headlight, the second attachment portion of the headlight, the first stay, and the second stay include a first bolt hole, a second bolt hole, a third bolt hole, and a fourth bolt hole, respectively. The first bolt is inserted in the first bolt hole and the third bolt hole. The second bolt is inserted in the second bolt hole and the fourth bolt hole. At least one of the first bolt hole and the third bolt hole is a first long hole elongated in a front-rear direction. At least one of the second bolt hole and the fourth bolt hole is a first elastic hole surrounded by an elastic body.

In the straddled vehicle, at least one of the first bolt hole and the third bolt hole is the first long hole elongated in the front-rear direction. Thus, the first attachment portion of the headlight can be moved forward and rearward relative to the first stay with the first bolt inserted in the first bolt hole and the third bolt hole. At least one of the second bolt hole and the fourth bolt hole is the first elastic hole surrounded by the elastic body, and thus, is elastically deformable. Even after the second bolt has been fastened, the second bolt is movable forward and rearward inside the first elastic hole within the range where the first elastic hole is elastically deformable. Since the second bolt does not hinder forward and rearward movement of the first attachment portion of the headlight, lateral orientation of the headlight can be adjusted even after the second bolt has been fastened. After the orientation of the headlight has been adjusted, the first bolt is fastened, thereby fixing the orientation of the headlight. In the straddled vehicle, it is unnecessary to fasten both the first bolt and the second bolt after adjustment of the headlight. This eases the work of adjusting the lateral orientation of the headlight and the work of fixing the orientation of the headlight.

It is sufficient that the shape of the first elastic hole conforms to the shape of the second bolt. Although not particularly limited, the first elastic hole may be a circular hole.

The first long hole and the first elastic hole may be located at symmetric positions with respect to a vertical plane passing through a vehicle center line.

This configuration eases adjustment of lateral orientation of the headlight.

The second attachment portion of the headlight may include a fifth bolt hole located below the second bolt hole. The second stay may include a sixth bolt hole located below the fourth bolt hole. The straddled vehicle may include a third bolt inserted in the fifth bolt hole and the sixth bolt hole and extending in the left-right direction. At least one of the fifth bolt hole and the sixth bolt hole may be a second elastic hole surrounded by an elastic body.

With this configuration, since at least two upper and lower elastic holes are formed, the headlight can be supported with stability. In addition, it is possible to prevent the headlight from rotating upward and downward about the second bolt. Thus, upward or downward shift of orientation of the headlight can be avoided.

The straddled vehicle may include a head pipe located rearward of the headlight. The head pipe may extend forward and downward. The third bolt may be located forward of and below the second bolt.

This configuration stabilizes support of the headlight along the head pipe.

The first attachment portion of the headlight may include a seventh bolt hole located below the first bolt hole. The first stay may include an eighth bolt hole located below the third bolt hole. The straddled vehicle may include a fourth bolt inserted in the seventh bolt hole and the eighth bolt hole and extending in the left-right direction. At least one of the seventh bolt hole and the eighth bolt hole may be a second long hole elongated in the front-rear direction.

This configuration stabilizes support of the headlight.

The second attachment portion of the headlight or the second stay may include a metal member and a rubber gromet, the metal member including a hole, the rubber gromet being fitted in the hole of the member. The first elastic hole may be located in the gromet.

With this configuration, the advantages described above can be obtained with the easy and reasonable structure of fitting the rubber grommet in the hole of the metal member.

A rubber constituting the gromet may have a hardness of 40° to 70°.

The first elastic hole may have an inner diameter of 15 mm to 18 mm.

Preferred embodiments of the present invention provide straddled vehicles each of which eases the work of adjusting lateral orientation of a headlight and the work of fixing orientation of the headlight.

### Brief description of the drawings

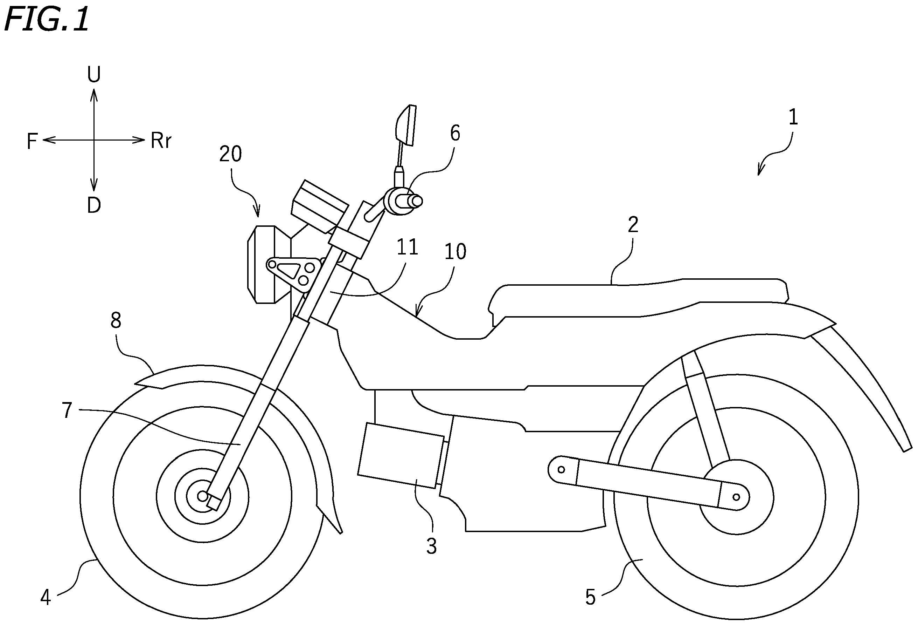

] FIG. 1 is a left side view of a motorcycle according to a preferred embodiment.
FIG. 2 is a front view of the motorcycle.
FIG. 3 is a front view of a headlight.
FIG. 4 is a right side view of the headlight.
FIG. 5 is a right side view of the headlight in which a first attachment portion is not shown.
FIG. 6 is a left side view of the headlight.
FIG. 7 is a left side view of the headlight in which a second attachment portion is not shown.
FIG. 8 is a cross-sectional view taken along line VIII-VIII in FIG. 3.
FIG. 9 is an enlarged view of a portion IX in FIG. 8.
FIG. 10 is an enlarged view of a portion X in FIG. 8.
FIG. 11 is a front view of a gromet.
FIG. 12 is a cross-sectional view taken along line XII-XII in FIG. 11.

### Embodiments of the invention

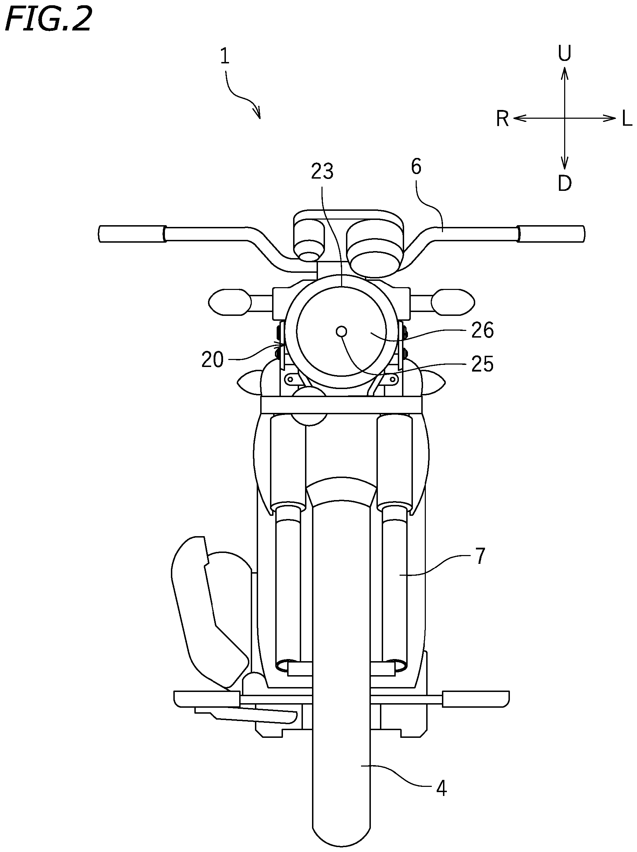

A preferred embodiment of a straddled vehicle will be described hereinafter with reference to the drawings. FIG. 1 is a left side view of a motorcycle 1 as an example of a straddled vehicle. FIG. 2 is a front view of the motorcycle 1.

Unless otherwise specified, front, rear, left, right, up, and down as used in the description below refer to front, rear, left, right, up, and down, respectively, as seen from an imaginary passenger sitting on a seat 2 in a case where the motorcycle 1 on which no passenger sits and no load is mounted is stationary in an upright position on a horizontal plane. Characters F, Re, L, R, U, and D in the drawings represent front, rear, left, right, up, and down, respectively.

As illustrated in FIG. 1, the motorcycle 1 includes a body frame 10 including a head pipe 11, the seat 2 supported by the body frame 10, an internal combustion engine 3 supported by the body frame 10, a front wheel 4, a rear wheel 5, a steering handle 6, and a headlight 20.

The internal combustion engine 3 is an example of a driving source for driving the motorcycle 1. The driving source is not limited to the internal combustion engine 3 and may be an electric motor.

A steering shaft (not shown) is inserted in the head pipe 11 and laterally rotatably supported by the head pipe 11. The steering handle 6 is fixed to an upper portion of the steering shaft. A front fork 7 is fixed to a lower portion of the steering shaft. The front wheel 4 is rotatably supported by a lower end portion of the front fork 7. A front fender 8 is fixed to the front fork 7.

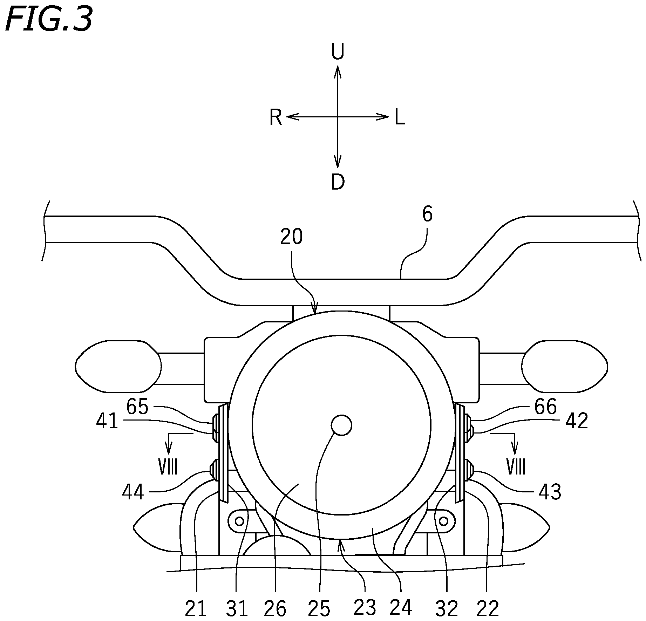

As illustrated in FIG. 3, the headlight 20 includes a body 23, a first attachment portion 21, and a second attachment portion 22.

The body 23 includes a case 24, a light source 25 attached to the case 24, and a transparent lens 26 attached to the case 24. The light source 25 in this preferred embodiment is a bulb. The light source 25, however, is not limited to the bulb and may be an LED. The type of the light source 25 is not particularly limited. In this preferred embodiment, the case 24 is circular when seen from the front. The shape of the case 24, however, is not particularly limited.

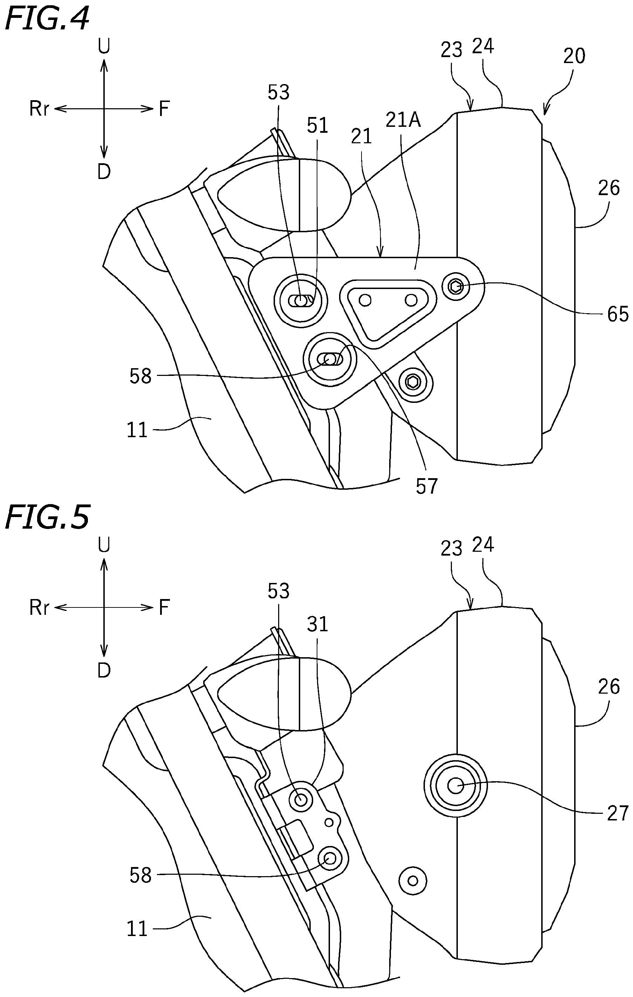

As illustrated in FIG. 4, the first attachment portion 21 includes a triangular plate 21A. The first attachment portion 21 is attached to a right side portion of the body 23 with a bolt 65. As illustrated in FIG. 5, a right side portion of the case 24 has a bolt hole 27. Although not shown, a front portion of the plate 21A has a bolt hole. As illustrated in FIG. 4, the bolt 65 is fastened to the bolt hole of the plate 21A and the bolt hole 27 of the case 24, thereby fixing the first attachment portion 21 to the right side portion of the case 24.

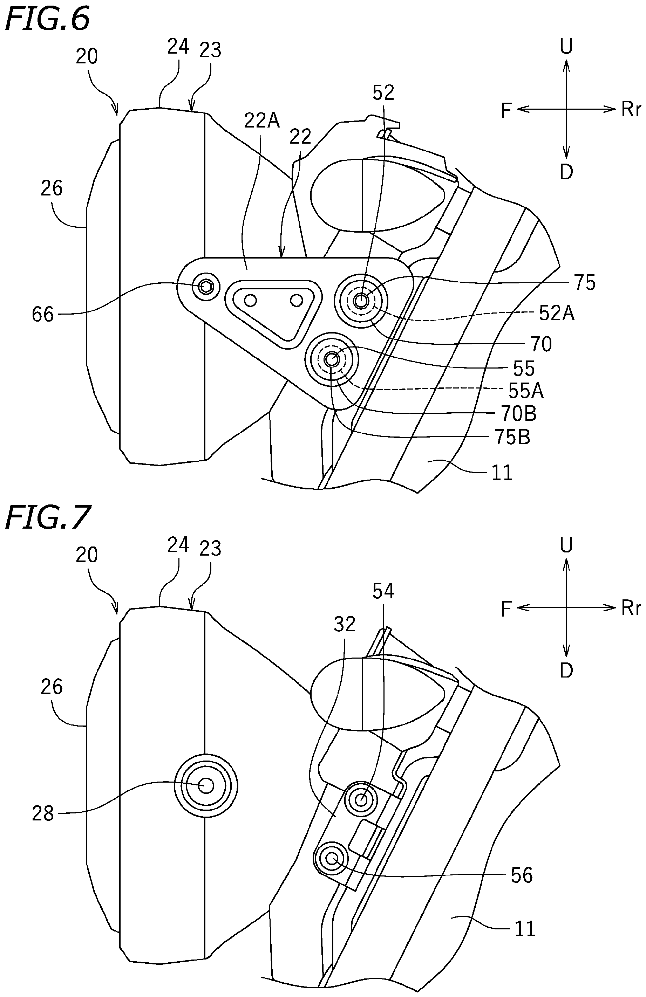

As illustrated in FIG. 6, in a manner similar to the first attachment portion 21, the second attachment portion 22 has a triangular plate 22A. The second attachment portion 22 is attached to a left side portion of the body 23 with a bolt 66. As illustrated in FIG. 7, a left side portion of the case 24 has a bolt hole 28. Although not shown, a front portion of the plate 22A has a bolt hole. As illustrated in FIG. 6, the bolt 66 is fastened to the bolt hole of the plate 22A and the bolt hole 28 of the case 24, thereby fixing the second attachment portion 22 to the left side portion of the case 24.

As illustrated in FIG. 5, a first stay 31 is fixed to the head pipe 11. The first stay 31 supports the first attachment portion 21 of the headlight 20. The first stay 31 has a bolt hole 53 and a bolt hole 58. The bolt hole 58 is located below the bolt hole 53. The bolt hole 58 is located forward of the bolt hole 53. The expression "one bolt hole is located below another bolt hole" herein means that the center of one bolt hole is located below the center of another bolt hole. The expression "one bolt is located forward of another bolt hole" herein means that the center of one bolt hole is located forward of the center of another bolt hole. The bolt hole 53 and the bolt hole 58 are circular holes.

As illustrated in FIG. 4, a rear portion of the plate 21A of the first attachment portion 21 has a bolt hole 51 and a bolt hole 57. The bolt hole 57 is located below the bolt hole 51. The bolt hole 57 is located forward of the bolt hole 51. The bolt hole 51 and the bolt hole 57 are long holes elongated in the front-rear direction. The dimensions of the bolt hole 51 and the bolt hole 57 in the front-rear direction are larger than the dimensions thereof in the top-bottom direction. When the plate 21A is placed on the first stay 31, a portion of the bolt hole 51 overlaps the bolt hole 53 and a portion of the bolt hole 57 overlaps the bolt hole 58 in a vehicle side view. In this preferred embodiment, the dimension of the bolt hole 51 in the top-bottom direction is equal to the diameter of the bolt hole 53, and the dimension of the bolt hole 57 is equal to the diameter of the bolt hole 58.

As illustrated in FIG. 7, a second stay 32 is fixed to the head pipe 11. The second stay 32 supports the second attachment portion 22 of the headlight 20. The second stay 32 has a bolt hole 54 and a bolt hole 56. The bolt hole 56 is located below the bolt hole 54. The bolt hole 56 is located forward of the bolt hole 54. The bolt hole 54 and the bolt hole 56 are circular holes.

As illustrated in FIG. 6, a rear portion of the plate 22A of the second attachment portion 22 has a hole 52A and a hole 55A. A gromet 70 is fitted in the hole 52A and a gromet 70B is fitted in the hole 55A, which will be specifically described later. The second attachment portion 22 includes the gromet 70 and the gromet 70B. The hole 55A is located below the hole 52A. The hole 55A is located forward of the hole 52A. The hole 52A and the hole 55A are circular holes. When the plate 22A is placed on the second stay 32, the hole 52A overlaps the bolt hole 54 and the hole 55A overlaps the bolt hole 56, in a vehicle side view.

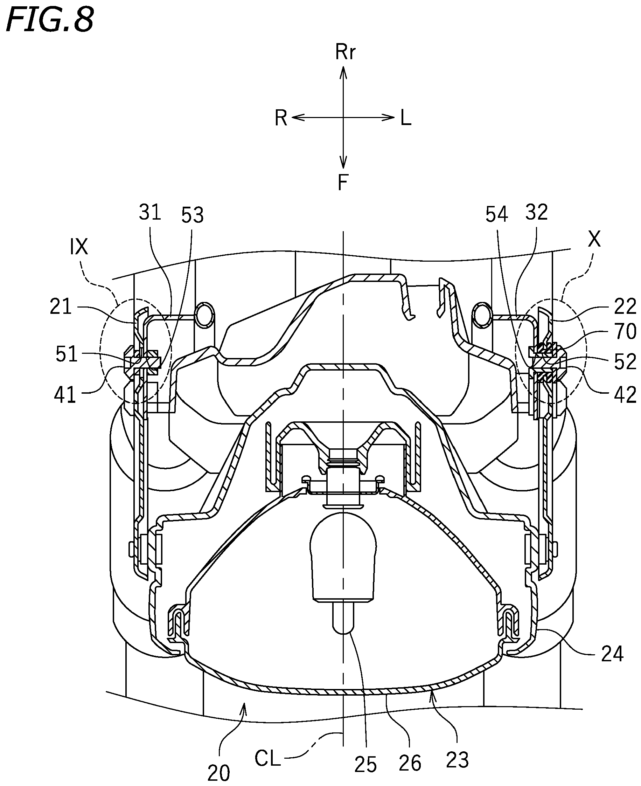

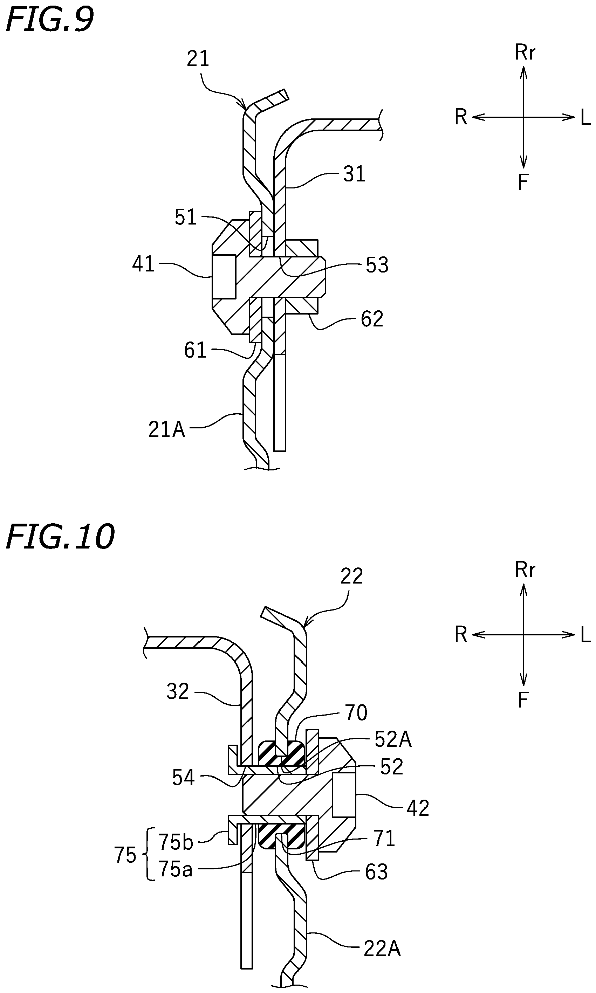

FIG. 8 is a cross-sectional view taken along line VIII-VIII in FIG. 3. FIG. 9 is an enlarged view of a portion IX in FIG. 8. FIG. 10 is an enlarged view of a portion X in FIG. 8.

As illustrated in FIG. 9, a first bolt 41 is inserted in the bolt hole 51 of the first attachment portion 21 and the bolt hole 53 of the first stay 31. The first bolt 41 is a bolt for fixing the first attachment portion 21 to the first stay 31. The first attachment portion 21 and the first stay 31 are stacked in the left-right direction, and thus, the first bolt 41 extends in the left-right direction. Character 61 denotes a washer, and character 62 denotes a nut engaged with the first bolt 41. The first bolt 41 is fastened to the nut 62 so that the first attachment portion 21 is thereby fixed to the first stay 31.

A fourth bolt 44 (see FIG. 3) is inserted in the bolt hole 57 of the first attachment portion 21 and the bolt hole 58 of the first stay 31. In a manner similar to the first bolt 41, the fourth bolt 44 is a bolt for fixing the first attachment portion 21 to the first stay 31 and extends in the left-right direction. A structure of fastening the fourth bolt 44 is similar to a structure of fastening the first bolt 41 (see FIG. 9). The fourth bolt 44 is fastened to a nut (not shown) so that the first attachment portion 21 is thereby fixed to the first stay 31. The fourth bolt 44 is located forward of and below the first bolt 41.

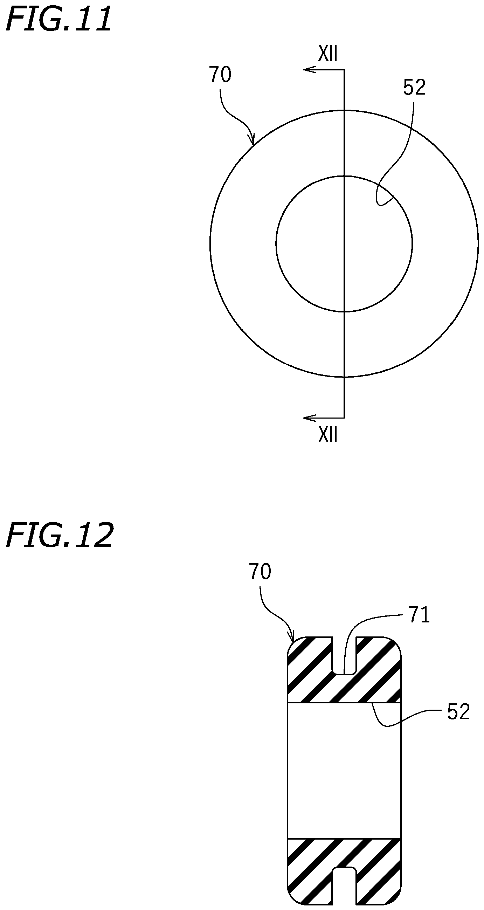

As illustrated in FIG. 10, the rubber gromet 70 is fitted in the hole 52A of the second attachment portion 22. FIG. 11 is a front view of the gromet 70. FIG. 12 is a cross-sectional view taken along line XII-XII in FIG. 11. The gromet 70 has a cylindrical shape, and a groove 71 is formed in an outer peripheral surface of the gromet 70. An edge of the hole 52A of the second attachment portion 22 is inserted in the groove 71 (see FIG. 10). The gromet 70 has a bolt hole 52 of a circular hole. Since the gromet 70 is an elastic body, the bolt hole 52 is elastically deformable. The bolt hole 52 is an example of a first elastic hole surrounded by an elastic body. The hardness of rubber constituting the gromet 70 is not particularly limited, and is, for example, 40° to 70°. The inner diameter of the bolt hole 52 is not particularly limited, and is, for example, 15 mm to 18 mm.

As illustrated in FIG. 10, a metal collar 75 is inserted in the bolt hole 52 of the gromet 70 and the bolt hole 54 of the second stay 32. The collar 75 includes a cylindrical portion 75a and a flange 75b located at an end of the cylindrical portion 75a. The cylindrical portion 75a is inserted in the bolt hole 52 and the bolt hole 54. Although not shown, a helical groove is formed in an inner peripheral wall of the cylindrical portion 75a. The second bolt 42 is inserted in the collar 75. The second bolt 42 is a bolt for fixing the second attachment portion 22 to the second stay 32. The second attachment portion 22 and the second stay 32 are stacked in the left-right direction, and thus, the second bolt 42 extends in the left-right direction. Character 63 denotes a washer. The second bolt 42 is engaged with the helical groove in the cylindrical portion 75a of the collar 75. The second bolt 42 is fastened to the collar 75 so that the second attachment portion 22 is thereby fixed to the second stay 32.

As illustrated in FIG. 6, the gromet 70B is fitted in the hole 55A of the second attachment portion 22. The shape, size, and material of the gromet 70B are similar to those of the gromet 70. The gromet 70B has a bolt hole 55 of a circular hole. Since the gromet 70B is an elastic body, the bolt hole 55 is elastically deformable. The bolt hole 55 is an example of a second elastic hole surrounded by an elastic body. A collar 75B similar to the collar 75 is inserted in the bolt hole 55 of the gromet 70B and the bolt hole 56 of the second stay 32. A third bolt 43 (see FIG. 3) is inserted in the collar 75B. In a manner similar to the second bolt 42, the third bolt 43 is a bolt for fixing the second attachment portion 22 to the second stay 32 and extends in the left-right direction. The third bolt 43 is fastened to the collar 75B so that the second attachment portion 22 is thereby fixed to the second stay 32. The third bolt 43 is located forward of and below the second bolt 42.

As illustrated in FIG. 8, the bolt hole 51 and the bolt hole 52 are located at symmetric positions with respect to a vertical plane passing through a vehicle center line CL. The bolt hole 55 and the bolt hole 57 are located at symmetric positions with respect to a vertical plane passing through the vehicle center line CL. In other words, the bolt hole 51 and the bolt hole 52 are located at laterally symmetric positions, and the bolt hole 55 and the bolt hole 57 are located at laterally symmetric positions.

A material for each of the plate 21A and the plate 22A is not particularly limited, and in this preferred embodiment, is made of a metal. Each of the first through fourth bolts 41 through 44, the collar 75, and the collar 75B is also made of a metal.

In the motorcycle 1 according to this preferred embodiment, lateral orientation of the headlight 20 is adjustable. A method for adjusting orientation of the headlight 20 will now be described.

As described above, the second attachment portion 22 of the headlight 20 is fixed to the second stay 32 with the second bolt 42 and the third bolt 43. The second bolt 42 is inserted in the bolt hole 52 of the second attachment portion 22 and the bolt hole 54 of the second stay 32 (see FIG. 10). The third bolt 43 is inserted in the bolt hole 55 of the second attachment portion 22 and the bolt hole 56 of the second stay 32. In this preferred embodiment, the bolt hole 52 is formed of the rubber gromet 70, and the bolt hole 55 is formed of the rubber gromet 70B. After the second bolt 42 and the third bolt 43 have been fastened, the bolt hole 52 and the bolt hole 55 can be slightly deformed. Accordingly, the second attachment portion 22 is slightly displaceable leftward and rightward relative to the second stay 32. The second attachment portion 22 is slightly rotatable about the vertical line with respect to the second stay 32.

The first attachment portion 21 of the headlight 20 is fixed to the first stay 31 with the first bolt 41 and the fourth bolt 44. The first bolt 41 is inserted in the bolt hole 51 of the first attachment portion 21 and the bolt hole 53 of the first stay 31 (see FIG. 9). The fourth bolt 44 is inserted in the bolt hole 57 of the first attachment portion 21 and the bolt hole 58 of the first stay 31. In this preferred embodiment, the bolt hole 51 and the bolt hole 57 are long holes elongated in the front-rear direction (see FIG. 4). Before the first bolt 41 is fastened, the first bolt 41 can be moved forward and rearward inside the bolt hole 51. Before the fourth bolt 44 is fastened, the fourth bolt 44 can be moved forward and rearward inside the bolt hole 57. Accordingly, before the first bolt 41 and the fourth bolt 44 are fastened, the first attachment portion 21 can be moved forward and rearward relative to the first stay 31 with the first bolt 41 inserted in the bolt hole 51 and the bolt hole 53 and with the fourth bolt 44 inserted in the bolt hole 57 and the bolt hole 58.

As illustrated in FIG. 8, the headlight 20 is supported by the first stay 31 located at the right of the vehicle center line CL and the second stay 32 located at the left of the vehicle center line CL. After the second bolt 42 and the third bolt 43 have been fastened and before the first bolt 41 inserted in the bolt hole 51 and the bolt hole 53 and the fourth bolt 44 inserted in the bolt hole 57 and the bolt hole 58 are fastened, when an operator moves the first attachment portion 21 forward or rearward relative to the first stay 31, a force is applied to the second attachment portion 22 supported by the second stay 32. This force deforms the gromet 70 and the gromet 70B. Accordingly, although the second attachment portion 22 is fixed to the second stay 32 with the second bolt 42 and the third bolt 43, forward or rearward movement of the first attachment portion 21 is not inhibited. The operator can adjust lateral orientation of the headlight 20 to an intended direction by moving the first attachment portion 21 forward and rearward.

After adjusting the lateral orientation of the headlight 20, the operator fastens the first bolt 41 and the fourth bolt 44. Accordingly, the first attachment portion 21 is immovably fixed to the first stay 31. As a result, the lateral orientation of the headlight 20 is fixed.

In the manner described above, in the motorcycle 1 according to this preferred embodiment, after the second bolt 42 and the third bolt 43 have been fastened, lateral orientation of the headlight 20 can be adjusted. In this preferred embodiment, all the first through fourth bolts 41 through 44 do not need to be fastened after adjustment of the orientation of the headlight 20. The orientation of the headlight 20 can be fixed only by fastening the first bolt 41 and the fourth bolt 44 after adjusting the orientation of the headlight 20. This configuration eases the work of adjusting lateral orientation of the headlight 20 and the work of fixing the orientation of the headlight 20.

In this preferred embodiment, the bolt hole 51 of the first attachment portion 21 and the bolt hole 52 of the second attachment portion 22 are located at symmetric positions with respect to the vertical plane passing through the vehicle center line CL. The bolt hole 57 of the first attachment portion 21 and the bolt hole 55 of the second attachment portion 22 are located at symmetric positions with respect to the vertical plane passing through the vehicle center line CL. This configuration eases adjustment of lateral orientation of the headlight 20.

In this preferred embodiment, the second attachment portion 22 of the headlight 20 includes the two upper and lower gromets 70 and 70B. The second attachment portion 22 has two upper and lower deformable bolt holes. Accordingly, the headlight 20 is supported with stability. In addition, it is possible to prevent or reduce upward or downward rotation of the headlight 20 about the bolt 41 before the first bolt 41 and the fourth bolt 44 are fastened. Accordingly, upward or downward shift of orientation of the headlight 20 is prevented or reduced.

In this preferred embodiment, the first attachment portion 21 of the headlight 20 has the bolt hole 57 as well as the bolt hole 51. This configuration stabilizes support of the headlight 20. In addition, it is possible to prevent or reduce upward or downward shift of orientation of the headlight 20 before the first bolt 41 and the fourth bolt 44 are fastened.

In this preferred embodiment, the head pipe 11 extends forward and downward. The third bolt 43 is located forward of and below the second bolt 42. The fourth bolt 44 is located forward of and below the first bolt 41. The second bolt 42 and the third bolt 43 are disposed along the head pipe 11. The first bolt 41 and the fourth bolt 44 are disposed along the head pipe 11. This configuration stabilizes support of the headlight 20 by the head pipe 11.

In this preferred embodiment, the elastic holes (bolt holes 52 and 53) of the second attachment portion 22 are formed of the rubber gromets 70 and 70B fitted in the holes 52A and 53A of the metal plate 22A. Elastic holes can be obtained by the simple and reasonable structure of fitting the gromets 70 and 70B in the holes 52A and 53A of the metal plate 22A. The advantages described above can be obtained with the relatively easy and reasonable structure.

One preferred embodiment has been described above, but the preferred embodiment is merely an example. Other various preferred embodiments may be made. Next, other preferred embodiments will be briefly described.

Although the first attachment portion 21 of the headlight 20 includes the triangular plate 21A and the second attachment portion 22 includes the triangular plate 22A in the preferred embodiment, the shapes and the structures of the first attachment portion 21 and the second attachment portion 22 are not particularly limited. Although the first attachment portion 21 and the second attachment portion 22 are separate members from the body 23 in the preferred embodiment, a portion or a whole of one or both of the first attachment portion 21 and the second attachment portion 22 may be integrated with the body 23.

Although the first attachment portion 21 and the second attachment portion 22 are respectively located rightward and leftward of the vehicle center line CL in the preferred embodiment, the first attachment portion 21 and the second attachment portion 22 may be respectively located leftward and rightward of the vehicle center line CL. For example, the configuration of the headlight 20 may be a configuration obtained by reversing left and right of the configuration of the preferred embodiment.

Although the gromets 70 and 70B are included in the second attachment portion 22 in the preferred embodiment, instead of the gromets 70 and 70B of the second attachment portion 22 or in addition to the gromets 70 and 70B of the second attachment portion 22, the second stay 32 may include gromets. In this case, the second stay 32 has elastic holes. At least one of the bolt hole 52 of the second attachment portion 22 and the bolt hole 54 of the second stay 32 may be an elastic hole. At least one of the bolt hole 55 of the second attachment portion 22 and the bolt hole 56 of the second stay 32 may be an elastic hole.

Although the bolt hole 51 and the bolt hole 57 of the first attachment portion 21 are long holes elongated in the front-rear direction and the bolt hole 53 and the bolt hole 58 of the first stay 31 are circular holes in the preferred embodiment, the bolt hole 51 and the bolt hole 57 of the first attachment portion 21 may be circular holes with the bolt hole 53 and the bolt hole 58 of the first stay 31 being long holes elongated in the front-rear direction. All the bolt hole 51, the bolt hole 57, the bolt hole 53, and the bolt hole 58 may be long holes elongated in the front-rear direction.

The straddled vehicle refers to a vehicle on which a passenger is to be astride. The straddled vehicle is not limited to the motorcycle 1. The straddled vehicle may be an electric tricycle, an all terrain vehicle (ATV), or a snowmobile, for example.

### Reference Signs List

1 motorcycle (straddled vehicle), 11 head pipe, 20 headlight, 21 first attachment portion, 22 second attachment portion, 22A plate (member), 23 body, 25 light source, 31 first stay, 32 second stay, 41 first bolt, 42 second bolt, 43 third bolt, 44 fourth bolt, 51 bolt hole (first bolt hole), 52 bolt hole (second bolt hole), 52A hole, 53 bolt hole (third bolt hole), 54 bolt hole (fourth bolt hole), 55 bolt hole (fifth bolt hole), 56 bolt hole (sixth bolt hole), 57 bolt hole (seventh bolt hole), 58 bolt hole (eighth bolt hole), 70 gromet

## Claims

1. A straddled vehicle (1) comprising:
a headlight (20) including
a body (23) including a light source (25),
a first attachment portion (21) located at one of leftward or rightward of the body (23), and
a second attachment portion (22) located another of leftward or rightward of the body (23);
a first stay (31) supporting the first attachment portion (21) of the headlight (20);
a second stay (32) supporting the second attachment portion (22) of the headlight (20);
a first bolt (41) extending in a left-right direction and fixing the first attachment portion (21) of the headlight (20) to the first stay (31); and
a second bolt (42) extending in the left-right direction and fixing the second attachment portion (22) of the headlight (20) to the second stay (32), wherein
the first attachment portion (21) of the headlight (20), the second attachment portion (22) of the headlight (20), the first stay (31), and the second stay (32) include a first bolt hole (51), a second bolt hole (52), a third bolt hole (53), and a fourth bolt hole (54), respectively,
the first bolt (41) is inserted in the first bolt hole (51) and the third bolt hole (53),
the second bolt (42) is inserted in the second bolt hole (52) and the fourth bolt hole (54),
at least one of the first bolt hole (51) and the third bolt hole (53) is a first long hole elongated in a front-rear direction, and
at least one of the second bolt hole (52) and the fourth bolt hole (54) is a first elastic hole surrounded by an elastic body.

2. The straddled vehicle (1) according to claim 1, wherein the first elastic hole is a circular hole.

3. The straddled vehicle (1) according to claim 1 or 2, wherein the first long hole and the first elastic hole are located at symmetric positions with respect to a vertical plane passing through a vehicle center line (CL).

4. The straddled vehicle (1) according to any one of claims 1 to 3, wherein
the second attachment portion (22) of the headlight (20) includes a fifth bolt hole (55) located below the second bolt hole (52),
the second stay (32) includes a sixth bolt hole (56) located below the fourth bolt hole (54),
the straddled vehicle (1) comprises a third bolt (43) inserted in the fifth bolt hole (55) and the sixth bolt hole (56) and extending in the left-right direction, and
at least one of the fifth bolt hole (55) and the sixth bolt hole (56) is a second elastic hole surrounded by an elastic body.

5. The straddled vehicle (1) according to claim 4, further comprising:
a head pipe (11) located rearward of the headlight (20), wherein
the head pipe (11) extends forward and downward, and
the third bolt (43) is located forward of and below the second bolt (42).

6. The straddled vehicle (1) according to claim 4 or 5, wherein
the first attachment portion (21) of the headlight (20) includes a seventh bolt hole (57) located below the first bolt hole (51),
the first stay (31) includes an eighth bolt hole (58) located below the third bolt hole (53),
the straddled vehicle (1) comprises a fourth bolt (44) inserted in the seventh bolt hole (57) and the eighth bolt hole (58) and extending in the left-right direction, and
at least one of the seventh bolt hole (57) and the eighth bolt hole (58) is a second long hole elongated in the front-rear direction.

7. The straddled vehicle (1) according to any one of claims 1 to 6, wherein
the second attachment portion (22) of the headlight (20) or the second stay (32) includes a metal member (22A) and a rubber gromet (70), the metal member (22A) including a hole (52A), the rubber gromet (70) being fitted in the hole (52A) of the member(22A), and
the first elastic hole is located in the gromet (70).

8. The straddled vehicle (1) according to claim 7, wherein a rubber constituting the gromet (70) has a hardness of 40° to 70°.

9. The straddled vehicle (1) according to any one of claims 1 to 8, wherein the first elastic hole has an inner diameter of 15 mm to 18 mm.

## Patentansprüche

1. Grätschsitzfahrzeug (1), mit:
einem Frontscheinwerfer (20), der aufweist
einen Körper (23) mit einer Lichtquelle (25),
einen ersten Befestigungsabschnitt (21), der auf der linken oder der rechten Seite des Körpers (23) angeordnet ist, und
einen zweiten Befestigungsabschnitt (22), der auf der entsprechend anderen linken oder rechten Seite des Körpers (23) angeordnet ist;
einer ersten Abstützung (31), die den ersten Befestigungsabschnitt (21) des Frontscheinwerfers (20) stützt;
einer zweiten Abstützung (32), die den zweiten Befestigungsabschnitt (22) des Frontscheinwerfers (20) stützt;
einem ersten Bolzen (41), der sich in einer Links-Rechts-Richtung erstreckt und den ersten Befestigungsabschnitt (21) des Frontscheinwerfers (20) an der ersten Abstützung (31) fixiert; und
einem zweiten Bolzen (42), der sich in der Links-Rechts-Richtung erstreckt und den zweiten Befestigungsabschnitt (22) des Frontscheinwerfers (20) an der zweiten Abstützung (32) fixiert, wobei
der erste Befestigungsabschnitt (21) des Frontscheinwerfers (20), der zweite Befestigungsabschnitt (22) des Frontscheinwerfers (20), die erste Abstützung (31) und die zweite Abstützung (32) entsprechend eine erste Bolzenbohrung (51), eine zweite Bolzenbohrung (52), eine dritte Bolzenbohrung (53) und eine vierte Bolzenbohrung (54) aufweisen,
der erste Bolzen (41) in die erste Bolzenbohrung (51) und die dritte Bolzenbohrung (53) eingesetzt ist,
der zweite Bolzen (42) in die zweite Bolzenbohrung (52) und die vierte Bolzenbohrung (54) eingesetzt ist,
die erste Bolzenbohrung (51) und/oder die dritte Bolzenbohrung (53) ein erstes Langloch sind, das in einer Vorwärts-Rückwärts-Richtung geweitet ist, und
die zweite Bolzenbohrung (52) und/oder die vierte Bolzenbohrung (54) eine erste nachgiebige Bohrung sind, die von einem nachgiebigen Körper umgeben ist.

2. Grätschsitzfahrzeug (1) nach Anspruch 1, wobei die erste nachgiebige Bohrung eine runde Bohrung ist.

3. Grätschsitzfahrzeug (1) nach Anspruch 1 oder 2, wobei das erste Langloch und die erste nachgiebige Bohrung an symmetrischen Positionen in Bezug auf eine vertikale Ebene liegen, die durch eine vertikale Mittellinie (CL) verläuft.

4. Grätschsitzfahrzeug (1) nach einem der Ansprüche 1 bis 3, wobei
der zweite Befestigungsabschnitt (22) des Frontscheinwerfers (20) eine fünfte Bolzenbohrung (55), die unter der zweiten Bolzenbohrung (52) angeordnet ist, aufweist,
die zweite Abstützung (32) eine sechste Bolzenbohrung (56), die unter der vierten Bolzenbohrung (54) angeordnet ist, aufweist,
das Grätschsitzfahrzeug (1) einen dritten Bolzen (43) aufweist, der in die fünfte Bolzenbohrung (55) und die sechste Bolzenbohrung (56) eingeführt ist und sich in der Links-Rechts-Richtung erschreckt, und
die fünfte Bolzenbohrung (55) und/oder die sechste Bolzenbohrung (56) eine zweite nachgiebige Bohrung sind, die von einem nachgiebigen Körper umgeben ist.

5. Grätschsitzfahrzeug (1) nach Anspruch 4, das ferner aufweist:
eine Hauptleitung (11), die hinter dem Frontscheinwerfer (20) angeordnet ist, wobei
die Hauptleitung (11) sich nach vorne und unten erstreckt und
der dritte Bolzen (43) vor und unter dem zweiten Bolzen (42) angeordnet ist.

6. Grätschsitzfahrzeug (1) nach Anspruch 4 oder 5, wobei
der erste Befestigungsabschnitt (21) des Frontscheinwerfers (20) eine siebte Bolzenbohrung (57), die unter der ersten Bolzenbohrung (51) angeordnet ist, aufweist,
die erste Abstützung (31) eine achte Bolzenbohrung (58), die unter der dritten Bolzenbohrung (53) angeordnet ist, aufweist,
das Grätschsitzfahrzeug (1) einen vierten Bolzen (44) aufweist, der in die siebte Bolzenbohrung (57) und die achte Bolzenbohrung (58) eingeführt ist und sich in der Links-Rechts-Richtung erstreckt, und
die siebte Bolzenbohrung (57) und/oder die achte Bolzenbohrung (58) ein zweites Langloch sind, das in der Vorwärts-Rückwärts-Richtung geweitet ist.

7. Grätschsitzfahrzeug (1) nach einem der Ansprüche 1 bis 6, wobei
der zweite Befestigungsabschnitt (22) des Frontscheinwerfers (20) oder die zweite Abstützung (32) ein Metallelement (22A) und eine Gummidurchführung (70) aufweist, wobei das Metallelement (22A) eine Bohrung (52A) hat und die Gummidurchführung (70) in die Bohrung (52A) des Elements (22A) eingepasst ist, und
die erste nachgiebige Bohrung in der Durchführung (70) angeordnet ist.

8. Grätschsitzfahrzeug (1) nach Anspruch, 7, wobei ein Gummimaterial als Komponente der Durchführung (70) eine Härte von 40° bis 70° hat.

9. Grätschsitzfahrzeug (1) nach einem der Ansprüche 1 bis 8, wobei die erste nachgiebige Bohrung einen Innendurchmesser von 15 mm bis 18 mm hat.

## Revendications

1. Véhicule à selle (1) comprenant :
un phare (20) comprenant
un corps (23) comprenant une source lumineuse (25),
une première partie d'attache (21) située au niveau de l'une des extrémités gauche ou droite du corps (23), et
une deuxième partie d'attache (22) située au niveau de l'autre des extrémités gauche ou droite du corps (23) ;
un premier renfort (31) supportant la première partie d'attache (21) du phare (20) ;
un deuxième renfort (32) supportant la deuxième partie d'attache (22) du phare (20) ;
un premier boulon (41) s'étendant dans une direction gauche-droite et fixant la première partie d'attache (21) du phare (20) au premier renfort (31) ; et
un deuxième boulon (42) s'étendant dans la direction gauche-droite et fixant la deuxième partie d'attache (22) du phare (20) au deuxième renfort (32), dans lequel
la première partie d'attache (21) du phare (20), la deuxième partie d'attache (22) du phare (20), le premier renfort (31) et le deuxième renfort (32) comprennent respectivement un premier trou de boulon (51), un deuxième trou de boulon (52), un troisième trou de boulon (53) et un quatrième trou de boulon (54),
le premier boulon (41) est inséré dans le premier trou de boulon (51) et le troisième trou de boulon (53),
le deuxième boulon (42) est inséré dans le deuxième trou de boulon (52) et le quatrième trou de boulon (54),
au moins l'un du premier trou de boulon (51) et du troisième trou de boulon (53) est un premier trou long allongé dans une direction avant-arrière, et
au moins l'un du deuxième trou de boulon (52) et du quatrième trou de boulon (54) est un premier trou élastique entouré d'un corps élastique.

2. Véhicule à selle (1) selon la revendication 1, dans lequel le premier trou élastique est un trou circulaire.

3. Véhicule à selle (1) selon la revendication 1 ou 2, dans lequel le premier trou long et le premier trou élastique sont situés à des positions symétriques par rapport à un plan vertical passant par une ligne centrale de véhicule (CL).

4. Véhicule à selle (1) selon l'une quelconque des revendications 1 à 3, dans lequel
la deuxième partie d'attache (22) du phare (20) comprend un cinquième trou de boulon (55) situé en-dessous du deuxième trou de boulon (52),
le deuxième renfort (32) comprend un sixième trou de boulon (56) situé en-dessous du quatrième trou de boulon (54),
le véhicule à selle (1) comprend un troisième boulon (43) inséré dans le cinquième trou de boulon (55) et le sixième trou de boulon (56) et s'étendant dans la direction gauche-droite, et
au moins l'un du cinquième trou de boulon (55) et du sixième trou de boulon (56) est un deuxième trou élastique entouré d'un corps élastique.

5. Véhicule à selle (1) selon la revendication 4, comprenant en outre :
un tube de tête (11) situé à l'arrière du phare (20), dans lequel
le tube de tête (11) s'étend vers l'avant et vers le bas, et
le troisième boulon (43) est situé en avant et en-dessous du deuxième boulon (42).

6. Véhicule à selle (1) selon la revendication 4 ou 5, dans lequel
la première partie d'attache (21) du phare (20) comprend un septième trou de boulon (57) situé en-dessous du premier trou de boulon (51),
le premier renfort (31) comprend un huitième trou de boulon (58) situé en-dessous du troisième trou de boulon (53),
le véhicule à selle (1) comprend un quatrième boulon (44) inséré dans le septième trou de boulon (57) et le huitième trou de boulon (58) et s'étendant dans la direction gauche-droite, et
au moins l'un du septième trou de boulon (57) et du huitième trou de boulon (58) est un deuxième trou long allongé dans la direction avant-arrière.

7. Véhicule à selle (1) selon l'une quelconque des revendications 1 à 6, dans lequel
la deuxième partie d'attache (22) du phare (20) ou le deuxième renfort (32) comprend un élément métallique (22A) et un passe-fil en caoutchouc (70), l'élément métallique (22A) comprenant un trou (52A), le passe-fil en caoutchouc (70) étant ajusté dans le trou (52A) de l'élément (22A), et
le premier trou élastique est situé dans le passe-fil (70).

8. Véhicule à selle (1) selon la revendication 7, dans lequel un caoutchouc constituant le passe-fil (70) a une dureté de 40° à 70°.

9. Véhicule à selle (1) selon l'une quelconque des revendications 1 à 8, dans lequel le premier trou élastique a un diamètre intérieur de 15 mm à 18 mm.
